# EUROPEAN PATENT SPECIFICATION

(11) **EP 1 426 090 B1**
(45) Date of publication and mention of the grant of the patent: **19.09.2018**
(21) Application number: 02027313.2
(22) Date of filing: 06.12.2002
(51) Int. Cl.: B01D 39/16, A47L 9/14

(54) **NON-WOVEN LAYER FOR A FILTER AND COMPOSITE LAYER INCORPORATING SAID NON-WOVEN LAYER**
FLIESSTOFFSCHICHT FÜR EINEN FILTER UND VERBUNDSCHICHT MIT EINER DERARTIGEN FLIESSTOFFSCHICHT
COUCHE NON TISSÉE POUR FILTRE ET COUCHE COMPOSITE CONTENANT UNE TELLE COUCHE NON TISSÉE

(43) Date of publication of application: 09.06.2004
(73) Proprietor: Eurofilters N.V., 3900 Overpelt (BE)
(72) Inventor: Sauer, Ralf, 3900 Overpelt (BE); Schultink, Jan, 3900 Overpelt (BE)
(74) Representative: Grünecker Patent- und Rechtsanwälte PartG mbB

(56) References cited:
- EP-A- 0 338 479
- WO-A-01/12427
- US-A- 5 855 992
- US-B1- 6 193 773

## Description

The invention is directed to a nonwoven layer for a filter, in particular, for a vacuum cleaner bag.

Nowadays, many vacuum cleaner bags comprise composites of nonwoven materials instead of conventional filter paper, these composite materials showing a high filtration efficiency and capacity.

EP 0 960 645 discloses such a prior art vacuum cleaner bag. This prior art construction is made of three layers, namely, in the direction of the air flow, a bulky meltblown, a meltblown fleece and a spunbond or spunlace layer. The upstream bulky meltblown layer which will be located at the inner side of the bag serves to remove larger dust particles and to hold the dust in its structure.

EP 0 338 479 A discloses, on one hand, a meltblown nonwoven having a preferable pore size of 30 µm to 40 µm, on the other hand, a highly porous spunbond nonwoven as a supporting fleece. The supporting spunbond can be mechanically stabilised by treated at points or across its whole surface using hot calendering. A similar heat treatment is envisaged for connecting the meltblown nonwoven to the supporting spunbond.

The prior art filter structures have a high filtration efficiency. However it turned out in practice that elongated particles or objects with small diameters such as hairs (having a diameter of about 70.2 ± 12.3 µm) tend to penetrate the filter. This penetration mainly occurs in the region where the stream of air of the vacuum cleaner meets the wall of the filter bag. The elongated objects act like spears and pierce the filter structure. Although these elongated objects usually do not exit the filter bag, many of them stick out of the outermost layer of the bag. Therefore, these objects are visible from the outside, which is aesthetically disturbing.

In view of this, it is the problem underlying the invention to provide a material that is suitable for use in a filter and has a better retention regarding elongated particles and objects.

This problem is solved by a filter comprising the features of claim 1. Accordingly, the invention provides a nonwoven layer for a filter, in particular, for a vacuum cleaner bag, wherein only a selected region of the nonwoven layer, the region having a predetermined thickness and a predetermined area, has an average pore size smaller than 50 µm and comprises fibers being bonded together such that a movement of the fibers relative to each other in a direction parallel to the surface of the layer is inhibited.

Surprisingly, it was found that a nonwoven layer having these features reduces the above-mentioned problem of penetration while maintaining a desired air permeability to a high degree. The selected region can be chosen so as to correspond only to the area where a stream of air meets the nonwoven layer. Alternatively, the selected region can be the whole area of the nonwoven layer. The thickness of the region may range from a thickness of the order of magnitude of one fiber diameter up to the total thickness of the nonwoven layer.

Such a bonding of the fibers has the effect that an elongated object striking the nonwoven layer is inhibited or even prevented of displacing the fibers in a direction parallel to the surface of the layer. This would happen with loose fibers that are not bonded in such a way. Therefore, the penetration of the elongated objects is reduced or prevented.

However, it is not necessary that two fibers are bonded to one another at each point where they are touching or crossing each other. In some cases it is also sufficient if the fibers are bonded only at some crossing points.

According to the invention, the nonwoven layer is a spunbond nonwoven layer.

Advantageously, the nonwoven layer has a basis weight between 10 and 100 g/m² and the spunbond fibers have an average fineness of 0.6 to 12 denier. These diameters ensure excellent filtration and air permeability properties.

According to the invention the selected region can comprise an adhesive. This adhesive enables the bonding of the fibers in a very efficient manner.

According to a preferred embodiment, the adhesive can be a hot melt, a cold glue, a dry bond adhesive and/or a thermoplastic polymer, preferably a pulverized polymer. In the case of a hotmelt, preferably one additional layer covers the tacky hotmelt. An example of a thermo-plastic pulverized polymer is a pulverized polyolefin.

In an advantageous embodiment, the amount of hotmelt can be between 1 and 10 g/m². In a more preferred embodiment, the basis weight of the hotmelt is approximately 3 - 5 g/m². Such a basis weight guarantees, on the one hand, a high penetration reduction and, on the other hand, still sufficient air permeability.

According to the invention, the selected region can be a hot calendered region.

The nonwoven layer according to the invention can be implemented in a filter composite in form of an additional layer. Alternatively, layers already present in a filter, such as a filter layer (for example meltblown layer), a support layer (for example a spunbond layer) or the like can be provided with fibers bonded together such that the movement of the fibers is inhibited.

The invention also provides a composite layer for a filter, in particular, for a vacuum cleaner bag comprising:
a first nonwoven layer according to the invention, and
a second nonwoven layer on top of the first nonwoven layer,
wherein an adhesive is located at an interface between the first and second nonwoven layer such that fibers of the first and/or the second nonwoven layer are bonded together and a movement of the fibers in the first and/or second nonwoven layer relative to each other in a direction parallel to the surface of the layer is inhibited.

Thus, the fibers in such a composite layer are bonded together within one layer, within each one of the layers and/or between the two layers.

According to a preferred embodiment, the first or the second nonwoven layer is a spunbond nonwoven layer, the other nonwoven layer is a meltblown nonwoven layer, and the adhesive is a hotmelt. Such a structure guarantees excellent filtration properties since the meltblown layer may act as filter and the spunbond layer may act as a support layer and the combination of both layers avoids penetrating of elongated objects through the structure.

The invention further provides a method for producing a spunbond nonwoven layer as described above comprising the step of:
treating only a selected region of the nonwoven layer, the region having a predetermined thickness and a predetermined area, such that the nonwoven layer has an average pore size smaller than 50 µm and such that the fibers are bonded together and a movement of the fibers relative to each other in a direction parallel to the surface of the layer is inhibited, wherein the treating step comprises the steps of:
spraying of hotmelt, cold glue, dry bond adhesive and/or thermoplastic polymer, preferably pulverized polymer, and
applying pressure to obtain a bonding of the fibers; or wherein the treating step comprises the step of hot calendering.

The invention also provides a method for producing a composite layer as described above comprising the steps of:
providing a first nonwoven layer,
applying an adhesive to the first nonwoven layer, and
providing a second nonwoven layer,
wherein the adhesive is located at an interface between the first and second nonwoven layer such that fibers of the first and/or the second nonwoven layer are bonded together and a movement of the fibers in the first and/or second nonwoven layer relative to each other in a direction parallel to the surface of the layer is inhibited.

According to a preferred embodiment, this method further comprises the step of applying pressure to obtain a bonding of the fibers. In this way, an improved bonding of the fibers can be obtained.

Further features and advantages of the invention are described with reference to the drawings.
- Figure 1: shows a sectional view of a first example of a composite layer in accordance with the invention.
- Figure 2: shows a sectional view of a second example of a composite layer in accordance with the invention.

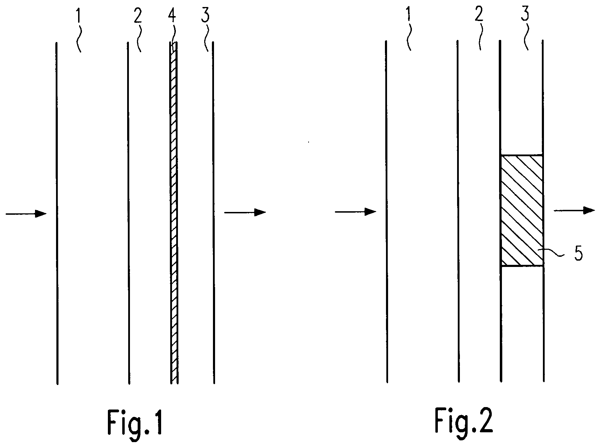

Figure 1 shows a section of an example of a three-layer composite. The direction of the airflow is indicated by an arrow. The first upstream layer is a bulky meltblown or air laid layer 1 by a meltblown fleece 2. Downstream, the meltblown fleece 2, a spun bond layer 3 is located. At the interface between meltblown fleece 2 and spunbond layer 3, hotmelt 4 is located. Due to the hotmelt, the fibers in the spunbond layer 3 and the meltblown layer 2 are bonded together and, thus, kept in a relatively fixed position. Incoming elongated objects such as hairs may penetrate the bulky meltblown 1 and meltblown 2. At the interface between meltblown 2 and spunbond 3, the fibers within each layer and between the layers are bonded together due to the hotmelt. Due to this bonding together, the pore size in the region of the bonded fibers is less than 50 µm, preferably 15 µm. Therefore, a relative displacement of the fibers at the interface is inhibited or even prevented; a further penetration of the hairs is avoided. In this example, the treated region extends over the whole area of the nonwoven layer. The thickness of the region is very small; only fibers situated at the interface are bonded together. Thus, the thickness is of the order of magnitude of some fiber diameters. Of course, the thickness of the treated region can be increased if desired and necessary.

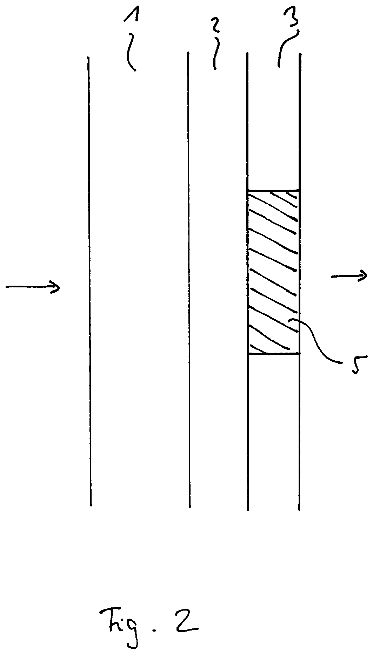

An alternative example is shown in Figure 2. The structure of the composite is the same as in the first example. However, no hotmelt is present. Instead of the hotmelt, the spunbond 3 was hot calendered. This calendering results in a modified region 5 where the fibers are bonded together. According to a preferred embodiment, the spunbond 3 is a polypropylene having a basis weight of approximately 65 g/m² and an average fineness of about 2.5 denier or a basis weight of approximately 25 g/m² and an average fineness of about 0.9 denier. Then, preferred process parameters for the calender step are a pressure of 5 bar, a temperature of 160° C and a speed of 10 - 20 m/min. In this example, only a selected area of the spunbond is treated. The thickness of the region, however, corresponds to the whole thickness of the spunbond layer 3. Therefore, in a final vacuum cleaner bag, this region preferably is to be placed where the incoming airflow strikes the bag.

It is to be understood that a nonwoven layer according to the invention can be used in other composite structures as well.

## Claims

1. Nonwoven layer for a filter, in particular, for a vacuum cleaner bag, wherein only a selected region of the nonwoven layer, the region having a predetermined thickness and a predetermined area, comprises an adhesive or is a hot calendered region and has an average pore size smaller than 50 µm and comprises fibers being bonded together such that a movement of the fibers relative to each other in a direction parallel to the surface of the layer is inhibited, wherein the nonwoven layer is a spunbond nonwoven layer.

2. Nonwoven layer according to claim 1 having a basis weight between 10 and 100 g/m² and wherein the spunbond fibers have an average fineness of 0.6 - 12 denier.

3. Nonwoven layer according to claim 1 or 2 wherein the adhesive is a hotmelt, a cold glue, a dry-bond adhesive, and/or a thermoplastic polymer, preferably a pulverized polymer.

4. Nonwoven layer according to claim 3 wherein the amount of hotmelt is between 1 and 10 g/m².

5. Composite layer for a filter, in particular, for a vacuum cleaner bag, comprising:
a first nonwoven layer according to one of the claims 1 - 4, and
a second nonwoven layer on top of the first nonwoven layer,
wherein an adhesive is located at an interface between the first and second nonwoven layer such that fibers of the first and/or the second nonwoven layer are bonded together and a movement of the fibers in the first and/or second nonwoven layer relative to each other in a direction parallel to the surface of the layer is inhibited.

6. Composite layer according to claim 5 wherein the second nonwoven layer is a meltblown nonwoven layer, and the adhesive is a hotmelt.

7. Method for producing a spunbond nonwoven layer according to one of the claims 1 - 4 comprising the steps of:
treating only a selected region of the nonwoven layer, the region having a predetermined thickness and a predetermined area, such that the nonwoven layer has an average pore size smaller than 50 µm and such that the fibers are bonded together and a movement of the fibers relative to each other in a direction parallel to the surface of the layer is inhibited;
wherein the treating step comprises the steps of:
spraying of hotmelt, cold glue, dry-bond adhesive, and/or thermoplastic polymer, preferably pulverized polymer, and
applying pressure to obtain a bonding of the fibers; or
wherein the treating step comprises the step of hot calendering.

8. Method for producing a composite layer according to claim 5 or 6 comprising the steps of:
providing a first nonwoven layer, wherein the first nonwoven layer is a spunbond nonwoven layer,
applying an adhesive to the first nonwoven layer, and
providing a second nonwoven layer,
wherein the adhesive is located at an interface between the first and second nonwoven layer such that fibers of the first nonwoven layer are bonded together and a movement of the fibers in the first nonwoven layer relative to each other in a direction parallel to the surface of the layer is inhibited

9. Method according to claim 8 further comprising the step of applying pressure to obtain a bonding of the fibers.

## Patentansprüche

1. Vliesstoff-Schicht für einen Filter, insbesondere für einen Staubsaugerbeutel, wobei nur ein ausgewählter Bereich der Vliesstoff-Schicht einen Klebstoff umfasst oder ein heißkalanderter Bereich ist und eine durchschnittliche Porengröße von weniger als 50 µm hat und Fasern umfasst, die so aneinander gebunden sind, dass eine Bewegung der Fasern relativ zueinander in einer Richtung parallel zu der Oberfläche der Schicht eingeschränkt wird, der Bereich eine vorgegebene Dicke und eine vorgegebene Fläche hat und die Vliesstoff-Schicht eine Spinn-Vliesstoff-Schicht ist.

2. Vliesstoff-Schicht nach Anspruch 1, die ein Flächengewicht zwischen 10 und 100 g/m² hat und die Spinn-Fasern eine durchschnittliche Fadenstärke von 0,6-12 Denier haben.

3. Vliesstoff-Schicht nach Anspruch 1 oder 2, wobei der Klebstoff ein Hotmelt, ein Kaltleim, ein Trockenklebstoff und/oder ein thermoplastisches Polymer, vorzugsweise ein pulverisiertes Polymer, ist.

4. Vliesstoff-Schicht nach Anspruch 3, wobei die Menge an Hotmelt zwischen 1 und 10 g/m² beträgt.

5. Verbundstoff-Schicht für einen Filter, insbesondere einen Staubsaugerbeutel, die umfasst:
eine erste Vliesstoff-Schicht nach einem der Ansprüche 1-4, und
eine zweite Vliesstoff-Schicht über der ersten Vliesstoff-Schicht,
wobei sich ein Klebstoff an einer Grenzfläche zwischen der ersten und der zweiten Vliesstoff-Schicht befindet, so dass Fasern der ersten und/oder der zweiten Vliesstoff-Schicht aneinander gebunden sind und eine Bewegung der Fasern in der ersten und/oder der zweiten Vliesstoff-Schicht relativ zueinander in einer Richtung parallel zu der Oberfläche der Schicht eingeschränkt wird.

6. Verbundstoff-Schicht nach Anspruch 5, wobei die zweite Vliesstoff-Schicht eine Meltblown-Vliesstoff-Schicht ist und der Klebstoff ein Hotmelt ist.

7. Verfahren zum Herstellen einer Spinn-Vliesstoff-Schicht nach einem der Ansprüche 1-4, **gekennzeichnet durch** die folgenden Schritte:
ausschließliches Behandeln eines ausgewählten Bereiches der Vliesstoff-Schicht, so dass die Vliesstoff-Schicht eine durchschnittliche Porengröße von weniger als 50 µm hat, die Fasern aneinander gebunden werden und eine Bewegung der Fasern relativ zueinander in einer Richtung parallel zu der Oberfläche der Schicht eingeschränkt wird, wobei der Bereich eine vorgegebene Dicke und eine vorgegebene Fläche hat;
und der Behandlungs-Schritt die folgenden Schritte umfasst:
Aufsprühen von Hotmelt, Kaltleim, Trockenklebstoff und/oder thermoplastischem Polymer, vorzugsweise pulverisiertem Polymer sowie
Ausüben von Druck, um eine Bindung der Fasern herzustellen; oder
der Behandlungs-Schritt den Schritt des Heißkalanderns umfasst.

8. Verfahren zum Herstellen einer Verbundstoff-Schicht nach Anspruch 5 oder 6 das die folgenden Schritte umfasst:
Bereitstellen einer ersten Vliesstoff-Schicht, wobei die erste Vliesstoff-Schicht eine Spinn-Vliesstoff-Schicht ist,
Aufbringen eines Klebstoffs auf die erste Vliesstoff-Schicht, und
Bereitstellen einer zweiten Vliesstoff-Schicht,
wobei sich der Klebstoff an einer Grenzfläche zwischen der ersten und der zweiten Vliesstoff-Schicht befindet, so dass Fasern der ersten Vliesstoff-Schicht aneinander gebunden sind und eine Bewegung der Fasern in der ersten Vliesstoff-Schicht relativ zueinander in einer Richtung parallel zu der Oberfläche der Schicht eingeschränkt wird

9. Verfahren nach Anspruch 8, das des Weiteren den Schritt des Ausübens von Druck zum Herstellen einer Bindung der Fasern umfasst.

## Revendications

1. Couche non tissée pour filtre, notamment pour sac d'aspirateur, dans laquelle seule une zone sélectionnée de la couche non tissée, la zone ayant une épaisseur prédéterminée et une aire prédéterminée, comporte un adhésif ou bien est une zone calandrée à chaud et présente une taille de pore inférieure à 50 µm et comprend des fibres qui sont liées les unes aux autres de façon qu'un mouvement des fibres les unes par rapport aux autres dans une direction parallèle à la surface de la couche soit empêché, dans laquelle la couche non tissée est une couche non tissée filée-liée.

2. Couche non tissée selon la revendication 1, ayant un poids de base compris entre 10 g/m² et 100 g/m² et dans laquelle les fibres filées-liées ont une finesse moyenne de 0,6 denier à 12 deniers.

3. Couche non tissée selon la revendication 1 ou 2, dans laquelle l'adhésif est une colle thermofusible, une colle froide, un adhésif de contact et/ou un polymère thermoplastique, de préférence un polymère pulvérisé.

4. Couche non tissée selon la revendication 3, dans laquelle la quantité de colle thermofusible est comprise entre 1 g/m² et 10 g/m².

5. Couche composite pour filtre, notamment pour sac d'aspirateur, comprenant :
une première couche non tissée selon l'une des revendications 1-4, et
une seconde couche non tissée par-dessus la première couche non tissée,
dans laquelle un adhésif est situé au niveau d'une interface entre la première et la seconde couche non tissée, de façon que les fibres de la première et/ou de la seconde couche non tissée soient liées les unes aux autres et qu'un mouvement des fibres de la première et/ou de la seconde couche non tissée les unes par rapport aux autres dans une direction parallèle à la surface de la couche soit empêché.

6. Couche composite selon la revendication 5, dans laquelle la seconde couche non tissée est une couche non tissée obtenue par fusion-soufflage et l'adhésif est une colle thermofusible.

7. Procédé de production d'une couche non tissée filée-liée selon l'une des revendications 1-4, comprenant les étapes consistant à :
traiter seulement une zone sélectionnée de la couche non tissée, la zone ayant une épaisseur prédéterminée et une aire prédéterminée, de façon que la couche non tissée présente une taille de pore inférieure à 50 µm et que les fibres soient liées les unes aux autres, et qu'un mouvement des fibres les unes par rapport aux autres dans une direction parallèle à la surface de la couche soit empêché ;
dans lequel l'étape de traitement comprend les étapes consistant à :
pulvériser une colle thermofusible, une colle froide, un adhésif de contact et/ou un polymère thermoplastique, de préférence un polymère pulvérisé, et
appliquer une pression pour obtenir une liaison des fibres ; ou
dans lequel l'étape de traitement comprend l'étape de calandrage à chaud.

8. Procédé de production d'une couche composite selon la revendication 5 ou 6, comprenant les étapes consistant à :
fournir une première couche non tissée, dans lequel la première couche non tissée est une couche non tissée filée-liée,
appliquer un adhésif sur la première couche non tissée, et
fournir une seconde couche non tissée,
dans lequel l'adhésif est situé au niveau d'une interface entre la première et la seconde couche non tissée, de façon que les fibres de la première couche non tissée soient liées les unes aux autres et qu'un mouvement des fibres de la première couche non tissée les unes par rapport aux autres dans une direction parallèle à la surface de la couche soit empêché.

9. Procédé selon la revendication 8, comprenant, en outre, l'étape consistant à appliquer une pression pour obtenir une liaison des fibres.
